Europäisches Patentamt

European Patent Office

Office européen des brevets

(19)

(11) Veröffentlichungsnummer: **0 392 186**
**A2**

(12) **EUROPÄISCHE PATENTANMELDUNG**

(21) Anmeldenummer: **90104256.4**

(22) Anmeldetag: **06.03.90**

(51) Int. Cl.⁵: **B29C 41/08, B29C 37/00**

(30) Priorität: **08.04.89 DE 3911485**

(43) Veröffentlichungstag der Anmeldung:
**17.10.90 Patentblatt 90/42**

(84) Benannte Vertragsstaaten:
**BE ES FR GB IT NL SE**

(71) Anmelder: **DEUTSCHE FIBRIT GESELLSCHAFT Ebers & Dr. Müller mbH**
**Cracauer Strasse 55**
**D-4150 Krefeld(DE)**

(72) Erfinder: **Bovender, Franz, Dipl.-Ing.**
**Schönwasserstrasse 26**
**D-4150 Krefeld(DE)**
Erfinder: **Nebelung, Günter, Dipl.-Ing.**
**Kenger Weg 31**
**D-4173 Kerken 1(DE)**

(74) Vertreter: **Patentanwaltsbüro Cohausz & Florack**
**Schumannstrasse 97**
**D-4000 Düsseldorf 1(DE)**

(54) **Mehrzonige, dünnwandige Kunststoffkörper aus Reaktionsharzen.**

(57) Die Erfindung betrifft ein Verfahren zur Herstellung einstückiger, dünnwandiger, biegeweicher, sichtseitig zwei- oder mehrzonig strukturierter Kunststoffkörper aus Reaktionsharzen zur Oberflächengestaltung von Ausstattungsteilen für Fahrzeuge.

Kennzeichen der Erfindung ist, daß eine Formschale während der Applikation eines ersten Reaktionsharzes im Bereich der einen Zone in der anderen Zone bzw. in den anderen Zonen abgedeckt wird, wobei aus einem Spalt zwischen Abdeckung und Formschalenoberfläche ein Gas oder Gasgemisch, wie Luft, strömt und nach dem Fertigstellen des Formteils in der einen Zone und Entfernen der Abdeckung auf die andere Zone oder nacheinander in gleicher Weise auf andere Zonen eine bzw. mehrere weitere Reaktionsharze auf die dann jeweils freiliegende Zone unter Bildung eines sichtseitig markanten scharfkantig abgegrenzten Übergangs von Zone zu Zone aufgetragen werden.

## Mehrzonige, dünnwandige Kunststoffkörper aus Reaktionsharzen

Die Erfindung bezieht sich auf mehrzonige, dünnwandige, biegeweiche Kunststoffkörper aus Reaktionsharzen zur Oberflächengestaltung von Ausstattungsteilen für Fahrzeuge jeder Art.

Bekanntlich verstehen sich unter dünnwandigen, biegeweichen Kunststoffkörpern für Verkleidungsteile beispielsweise tiefgezogene ABS-PVC-Folien oder aus im Rotationsgießverfahren gewonnene PVC-Häute als hinterschäumte Oberflächenmaterialien für die Fahrzeugsausstattung. Aufbau und Art der verwendeten Werkstoffe, Bearbeitungstechniken, Anwendung und Historie sind u.a. in "Kunststoffe und Elastomere in Kraftfahrzeugen", Günter Walter, Verlag W. Kohlhammer, Stuttgart, 1985, S. 209, Kap. 4.3.1.1 und 4.3.1.2 beschrieben.

W. Behrens nennt in "Kunststoffe als Problemlöser im Automobilbau", VDI Verlag GmbH, Düsseldorf, 1987, S. 118, Tabelle 1, lackierte Folien-Formteile aus PVC/ABS/SAN, eingefärbte oder lakkierte PVC-Kompacthäute sowie eingefärbte bzw. lackierte PUR-Elastomerhäute oder PUR-Integralschaumhäute als aktuell konkurrierende Konzepte für PUR-hinterschäumte Kfz-Instrumententafel-Abdeckungen.

Es ist gemäß der DE-PS 35 20 152 bekannt, eine derartige Formhaut aus thermoplastischem Material zunächst stückweise in getrennten Formhälften zu fertigen und die Teilstücke sodann längs definierter Flächen in Berührungskontakt zu bringen, dann unter leichtem Druck zusammenzufügen und dabei überstehende Randteile abzuquetschen, um mehrzonige, unterschiedlich eingefärbte, dünnwandige Körper aus Kunststoff zu erhalten.

Des weiteren ist nach der DE-PS 33 36 934 ein Armaturenbrett bekannt, das aus zwei Übereinander angeordneten Schaumstoffkörpern mit verschiedenen Stauchhäuten so gestaltet ist, daß es im oberen Bereich formbeständig ist und einen gewünschten Konturverlauf aufweist, wogegen der untere Bereich des Armaturenbrettes komfortverbessernde bzw. verletzungsmindernde Eigenschaften besitzt durch Einsatz unterschiedlicher Bezüge.

Schließlich ist auch aus der DE-PS 35 25 094 gattungsgemäß bekannt, in eine offene Form einen Lack und anschließend eine Polyurethan-Elastomerschicht einzutragen und diese Schichtung in einer Stützform mit einem Träger durch Verschäumen zu verbinden.

Mangelhaft bei dem technischen Stand gemäß DE-PS 35 20 152 ist, daß zur Darstellung wünschenswerter Mehrzonigkeit dünnwandiger Kunststoffkörper das Material thermoplastisch sein muß, die entsprechenden, hitzebeständigen Glavanoformen einem erheblichen Verschleiß durch Temperaturwechsel unterliegen, die Formen durch die Mehrteiligkeit teuer sind, und der Verlauf und die Lage der Fügelinie zwischen den Zonen verfahrensbedingt nicht frei gestalt- und wählbar sind. Des weiteren können im Gebrauch erhebliche Dichtprobleme zwischen den unterschiedlichen, dünnwandigen Formschalen auftreten.

Auch ist mangelhaft, daß zur mehrzonigen Ausgestaltung gemäß DE-PS 33 36 934 verschiedene vorgefertigte Bezüge derartig in eine Stützform zu bringen sind, daß ihr Übergangsbereich während der Hinterschäumung aufwendig dicht gehalten werden muß, und daß nach der DE-PS 35 25 094 für nur bereichsweise der Sonneneinstrahlung ausgesetzte langzeitstabile Polyurethanformhäute eine aufwendige, vollflächige, lichtechte In-Form-Lackierung im Mehrstufenverfahren notwendig ist.

Preisgünstige, elastisch ausreagierende und dabei lichtechte Polyisocyanate auf Basis des aromatischen Diphenylmethan -4,4' Diisocyanates (MDI) oder Toluol -2,4 (6) -Diisocyanates (TDI) sind nicht in Sicht.

Die Darstellung allein aus massegefärbten polyol- und/oder luftfeuchtereaktiven, lichtbeständigen, aliphatischen Isocyanaten der gesamten erwarteten Formhautstärke und -größe in möglicherweise lösungsmittelfreier Zubereitung ist aufgrund des in der Regel etwa 2,5- bis 5- und in Extremfällen auch bis zu 10-fachen Rohstoffpreises gegenüber handelsüblichen aromatischen Isocyanaten nicht ausreichend wirtschaftlich und wird heute gewöhnlich am Markt nicht honoriert.

Der Erfindung liegt daher die Aufgabe zugrunde, wirtschaftlich eine im Hinblick auf die Härte und/oder Temperaturstabilität und/oder Lichtechtheit und/oder Farbgestaltung und/oder Haptik und/oder Preiswertigkeit und/oder Verarbeitbarkeit und/oder Schichtdicke und/oder Glanzgrad mehrzonige genarbte Formhaut mit freier Wahl einer Trennlinienlage einstückig in preiswerten Formen aus vernetztem, also duroplastischem, Elastromer in einem einfachen Arbeitsgang darzustellen.

Erfindungsgemäß wird die Aufgabe gelöst durch Herstellung einstückiger, dünnwandiger biegeweicher, sichtseitig zwei-oder mehrzonig strukturierter Kunststoffkörper aus Reaktionsharzen zur Oberflächengestaltung von Ausstattungsteilen für Fahrzeuge, bei dem eine Formschale während der Applikation eines ersten Reaktionsharzes im Bereich der einen Zone in der anderen Zone bzw. in den anderen Zonen abgedeckt wird, wobei aus einem Spalt zwischen Abdeckung und Formschalen- oberfläche ein Gas oder Gasgemisch, wie Luft, strömt und nach dem Fertigstellen des Formteils in der einen Zone und Entfernen der Abdeckung auf die andere Zone oder nacheinander in gleicher Weise auf andere Zonen eine bzw. mehrere weitere Reaktionsharze auf die dann jeweils freiliegende Zone unter Bildung eines sichtseitig markanten scharfkantig abgegrenzten Übergangs von Zone zu Zone aufgetragen werden. Vorzugsweise wird als Reaktionsharz Polyurethan verwendet, das nach Aushärtung die später dort gewünschte Hautqualität bildet. Nach Entfernen der Schablone wird die andere, zuvor abgedeckte Zone, z.B. der obere Teil der Formschale, mit der dort gewünschten Hautqualität besprüht.

Man erreicht dadurch eine saubere Trennlinie zwischen verschiedenen Polyurethanqualitäten auch auf genarbten Oberflächen in einer einteiligen Form auf der Sichtseite, während der Übergang rückseitig verschwommen sein darf, weil man ihn dort nicht sieht, und verschwommen sein soll, um eine gute Verbindung der sich wahlweise in chemischem Aufbau, Preis, Viscosität, Reaktivität, Füllstoff- und Lösungsmittelgehalt, Lichtechtheit, Wärmestabilität, Farbe, Glanz, Härte, Haptik, Schichtdicke und Festigkeit bevorzugt unterscheidenden Reaktionsharzqualitäten herzustellen.

In einer beispielhaften Ausbildung der Erfindung wird das Negativ einer Instrumententafel 1 mit einer trennmittelbehandelten Schablone 2 im oberen Teil abgedeckt und dem entstehenden Spaltraum Luft 3 zugeführt, die am Schablonenrand ruhig entweicht 4 und den abgedeckten Raum sicher von Spritznebel freihält, während auf den unteren Bereich von 1 ein preiswertes Polyol-Isocyanatgemisch des MDL-Typs in dunkler Farbe mit einer Wärmebeständigkeit von ca. 85 °C in gewünschter Wandstärke durch Sprühen aufgebracht wird 5.
Nach Wegnahme der Schablone 2 wird der dortige Formbereich mit einem Polyol-Isocyanatgemisch eines hochwertigen aliphatischen, lichtechten Typs in beliebiger Farbe mit einer Wärmebeständigkeit von ca. 130 °C in etwa gleicher Wandstärke aufgebracht, wobei es dann sichtflächenrückseitig zu Materialüberlappungen und innigem Verbund an der Trennlinie der entstandenen einstückigen Haut kommt. Ausgehärtete Spritznebel am Schablonenrand lassen sich gelegentlich leicht durch Abziehen entfernen.

Diese Arbeitsweise gestattet beispielsweise auch eine bereichsweise In-Form-Lackierung in bevorzugter Schichtdicke bis 100 μm und dadurch erzielbare Mehrfarbigkeit von einstückigen PUR-Formhäuten mit sauberen, beliebig plazierbaren Trennlinien auf genarbten Oberflächen mit hinterfüllten Reaktionsharzqualitäten.

Durch die erfindungsgemäße Ausbildung können erstmals einstückige Kunststoffkörper aus Reaktionsharzen zur Oberflächengestaltung von Ausstattungsteilen von Fahrzeugen jeder Art in einteiligen Formen hergestellt werden, die im praktischen Einsatz den unterschiedlichen Anforderungen an verschiedene Zonen aus der Warte wirtschaftlicher und/oder technischer Werkstoffabstimmung gerecht werden.

In weiterer Ausgestaltung können nach dem erfindungsgemäßen Verfahren in gleicher Arbeitsweise durch abgestufte Schablonengeometrien auch Formhäute mit mehr als zwei Zonen unterschiedlicher Qualität dargestellt werden.

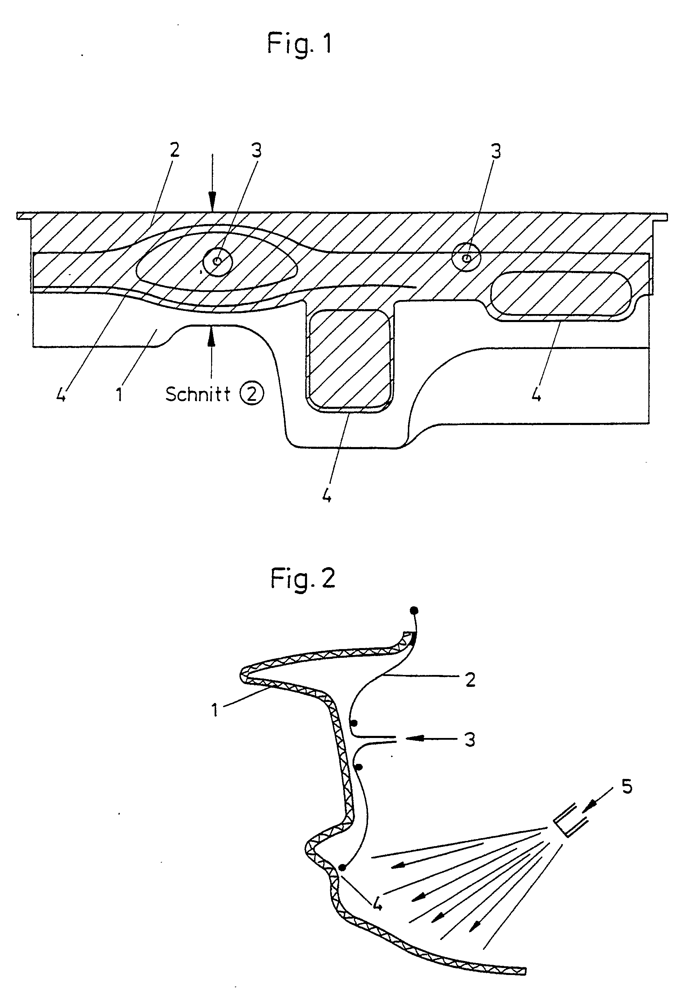

## Ansprüche

1. Verfahren zur Herstellung einstückiger, dünnwandiger, biegeweicher, sichtseitig zwei- oder mehrzonig strukturierter Kunststoffkörper aus Reaktionsharzen zur Oberflächengestaltung von Ausstattungsteilen für Fahrzeuge, bei dem eine Formschale während der Applikation eines ersten Reaktionsharzes im Bereich der einen Zone in der anderen Zone bzw. in den anderen Zonen abgedeckt wird, wobei aus einem Spalt zwischen Abdeckung und Formschalenoberfläche ein Gas oder Gasgemisch, wie Luft, strömt und nach dem Fertigstellen des Formteils in der einen Zone und Entfernen der Abdeckung auf die andere Zone oder nacheinander in gleicher Weise auf andere Zonen eine bzw. mehrere weitere Reaktionsharze auf die dann jeweils freiliegende Zone unter Bildung eines sichtseitig markanten scharfkantig abgegrenzten Übergangs von Zone zu Zone aufgetragen werden.

2. Verfahren nach Anspruch 1,
**dadurch gekennzeichnet,** daß als Reaktionsharz Polyurethan verwendet wird.

# Fig. 1

Schnitt ②

# Fig. 2